# EUROPEAN PATENT APPLICATION

(11) **EP 2 712 501 A1**
(43) Date of publication of application: **02.04.2014**
(21) Application number: 13004705.3
(22) Date of filing: 27.09.2013
(51) Int. Cl.: A01K 39/02

(54) **Hummingbird feeder**

(30) Priority: 27.09.2012 US 201261706721 P
(71) Applicant: Woodstream Corporation, Lititz PA 17543 (US)
(72) Inventor: Hinrichs, Gregory, Irvine, CA 92612 (US)
(74) Representative: Herrmann, Uwe

(57) **Abstract**

A hummingbird feeder configured to allow a large number of hummingbirds to feed simultaneously is provided. The hummingbird feeder includes a longitudinally extending generally horizontally arranged feeding reservoir. Feeding holes are spaced from one another along the exterior of the reservoir and at positions offset from the apex of the outer surface. The feeder can include removable perches. The feeder is preferably sized such that a hummingbird tongue can reach the lowermost surface of the reservoir so as to prevent pooling of liquid hummingbird feed. The feeder can include a transparent bottom portion to permit observation of the hummingbirds' tongues during feeding. The feeder can also include an auxiliary storage container designed for gravity feeding additional hummingbird feed into the horizontal reservoir.

## Description

This application is entitled to and hereby claims the priority of co-pending U.S. Provisional application, Serial No. 61/706,721, filed September 27, 2012.

### BACKGROUND OF THE INVENTIONS

### Field of the Inventions

The present invention is directed to hummingbird feeders, and more particularly, hummingbird feeders that are arranged in a generally horizontal configuration for feeding large numbers of hummingbirds simultaneously.

### Description of the Related Art

Some hummingbird feeders that have long been commercially available, have a generally vertical configuration. This type of feeder typically has a generally cylindrical shape with a plurality of feeder holes around the outer surface. Additionally, perches can be mounted adjacent to the feeder holes.

Some known designs, such as the above known design, do not successfully accommodate a large number of hummingbirds (e.g., 10 or more birds) for simultaneous feeding. Rather, despite the provision of perches, territorial behaviors of some hummingbirds can prevent large numbers of birds from feeding simultaneously from such known feeder designs.

More specifically, observation of hummingbird feeding habits reveals that hummingbirds can be quite territorial in the vicinity of hummingbird feeders. This territorial behavior can include one or more birds charging at high speed toward another bird that is in the process of feeding at a hummingbird feeder. Thus, as a hummingbird which is attempting to feed approaches a vertically arranged hummingbird feeder, their view of their surroundings becomes quite limited, by the presence of the vertical tank in front of their face, as they insert their beak and tongues into the feeder holes. When the hummingbird is feeding, with such a feeder, a charging territorial bird, sometimes referred to as a "bully bird," might scare off the feeding bird. Such a bully bird that adopts such territorial, bullying behavior can successfully protect a hummingbird feeder for itself and prevent other birds from feeding simultaneously.

### SUMMARY OF THE INVENTIONS

An object of the present invention disclosed herein is to take account of the realization that certain territorial behaviors of hummingbirds can be a reason why certain hummingbird feeders cannot successfully attract a large number of hummingbirds to feed simultaneously. For example, the classic hummingbird feeder type discussed above, which includes a vertical cylindrical storage tank and a plurality of feeder holes, limits a hummingbird's ability to see approaching threats.

Another object of the present invention is to provide a hummingbird feeder that is configured such that a feeding hummingbird can maintain a wide angle view of its surroundings, which enables the hummingbird to maneuver more defensively and timely and can thus reduce the ability of a bullying bird to collide with or come into close proximity to the feeding bird. As such, a hummingbird can more easily see over the apex of the reservoir while their beak is inserted into a feeding hole, and thereby maintain a wide angle view of its surroundings and other approaching birds. It has been observed that such a configuration provides a more conducive environment for a large number of hummingbirds to feed simultaneously, and in some instances, in a calmer and more peaceful state.

A further object of the present invention is to provide a hummingbird feeder in accordance with the preceding objects that includes an elongated reservoir extending along a generally horizontal axis and has a plurality of feeding holes offset from and adjacent to an apex of the reservoir. The length of the feeder relative to the width or sectional profile thereof is substantially greater than with traditional feeders, producing a "bar-like" or "rod-like" configuration that allows large numbers of birds to access the nectar at once.

Yet another object of the present invention as disclosed herein is to provide a hummingbird feeder in accordance with the preceding objects that takes into account the realization that by constructing part of a hummingbird feeder with optically clear and at least partially cylindrically curved outer surface the feeder, when filled with nectar, can create an optically magnifying function which can reveal anatomy of a hummingbird, which has only recently been discovered. For example, researchers have recently discovered that a hummingbird does not drink by a capillary action through its tongue. Rather, a hummingbird's bifurcated tongue includes hair-like extensions which unfurl as a hummingbird extends its tongue into liquid nectar. The tongue then wraps around some of the nectar, thereby trapping it in its bifurcated tongue and drawing its tongue and the trapped nectar into its mouth. These structures of the hummingbird's tongue are extraordinarily small, and thus extremely difficult to see with the naked eye. However, by designing a hummingbird feeder with a built-in optically magnifying function, users can observe a hummingbird's tongue during feeding, and in some instances, with the naked eye.

A still further object of the present invention is to provide a hummingbird feeder that includes a longitudinally extending generally cylindrical reservoir body, with an optically transparent curved lower surface. One or more feeding holes are disposed on an upper surface of the cylindrical body. Thus, when the reservoir is filled with a liquid, such as a nectar, the optically transparent lower cylindrical surface of the cylindrical body cooperates with the nectar to form an optical magnifier, thereby magnifying a view of the hummingbird's tongue during feeding.

Yet another object of the present invention as disclosed herein is to provide a hummingbird feeder in accordance with the preceding objects that takes into account the realization that when a hummingbird feeder is configured with a generally longitudinally extending cylindrical shape, the reservoir can retain a small amount of pooled feed nectar, out of reach of a hummingbird's tongue, and thereby promote the growth of mold within the reservoir. More specifically, it has been discovered that as long as the distance from a hummingbird feeder hole is no more than about 1.5 to about 2 inches above the lowermost inner surface of the reservoir, hummingbirds can nearly completely empty the reservoir and thereby prevent substantial pooling of nectar and thereby prevent mold growth.

A still further object of the present invention as disclosed herein is to provide a hummingbird feeder in accordance with the preceding objects that includes a reservoir and at least one hummingbird feeder port disposed no more than about 1-1/2 to 2 inches above the lowermost surface of the reservoir.

A still further object of the present invention as disclosed herein is to provide a hummingbird feeder in accordance with the preceding objects that takes into account the realization that when large numbers of hummingbirds feed simultaneously (e.g., 10 or more birds), the energy level of the birds as a group can be significantly affected when perches are provided adjacent the feeding holes. For example, it has been observed that when using a longitudinally extending generally horizontal hummingbird feeder with a plurality of feeding holes, a large number (e.g., 50) of hummingbirds can feed simultaneously. This is particularly true when the hummingbird feeder holes are offset from the apex of the reservoir of the feeder such that the hummingbirds can simultaneously feed and maintain a wide angle view of its surroundings. As such, bully birds are less effective in deterring other hummingbirds from feeding from the feeder, and thus, a large number of hummingbirds can feed simultaneously.

When there are no perches provided adjacent to the feeding holes, the hummingbirds feed while hovering. During this process, the hummingbirds will periodically dart away from the feeder, then return again and continue feeding. This creates a relatively frenetic group energy, with the sound of hummingbird wings and audible high-pitched chirping.

On the other hand, it has been observed that when perches are provided adjacent to the feeding holes of such a feeder, a large number of hummingbirds can and will feed simultaneously. This is an unusual sight for hummingbird observers. More particularly, it is generally uncommon to observe 10 or more hummingbirds, standing on a perch, and simultaneously feeding. This allows an observer to view a large number of birds simultaneously, and to observe, side-by-side, variations in color, anatomy, and even "personality" of different birds.

Accordingly, yet another object of the present invention as disclosed herein is to provide a longitudinally extending generally horizontal hummingbird feeder in accordance with the preceding objects that includes removable perches. The perches may include engagement portions which extend into feeder holes. For example, such a removable perch can include an engagement portion at each longitudinal end thereof. Thus, the removable perch can be attached to the feeder by inserting the engagement portions into two of the feeding holes. Although two of the feeding holes are then blocked and unavailable for hummingbird feeding, the remaining holes are disposed adjacent to the perch and are available for feeding.

Another object of the present invention as disclosed herein is to provide a hummingbird feeder in accordance with the preceding objects that takes into account the realization that a longitudinally extending generally horizontally arranged liquid feeding device can be highly unstable due to the "sloshing" motion of liquid inside the feeder. Thus, in accordance with some of the embodiments disclosed herein, such a longitudinally extending generally horizontally orientated liquid-filled device, such as a hummingbird feeder, includes two adjustable suspension mechanisms configured to allow for precise adjustment of the vertical height of each end of the device.

For example, in some embodiments, the suspension devices include two ropes - one for each end of the longitudinally extending hummingbird feeder. The ropes can be attached to the reservoir of the feeder in any known technique. Additionally, the ropes can include adjustment devices, such as clips, Velcro, spring-loaded clasp mechanisms, or adjustable knots such as hitches, allowing the length of each of the ropes to be precisely adjusted so as to allow a user to conveniently achieve a horizontal arrangement of the feeder. This adjustability provides significant benefit to the user of such a feeder. For example, as noted above, the "sloshing effect" of liquid, such as nectar, moving longitudinally along the hummingbird feeder reservoir, can cause the reservoir to become unstable. For example, if a large amount of nectar flows to one end of the feeder, that end of the feeder can become much heavier than the other end, thereby pulling that end of the reservoir further downwardly. As the reservoir becomes more imbalanced, more liquid is drawn toward the lower end, thereby creating an even more unstable situation, possibly leading to nectar flowing out of feeder holes at the lower end, or causing the feeder to fall to the ground.

Thus, by including two adjustable suspension mechanisms, a user can more conveniently achieve a horizontal configuration.

A still further object of the present invention is to provide a hummingbird feeder that includes a generally horizontally arranged liquid feeding reservoir and mounting elements such as suction cups for attaching the feeder to a window.

These and other objects of the invention, as well as many of the intended advantages thereof, will become more readily apparent when reference is made to the following description taken in conjunction with the accompanying drawings.

### BRIEF DESCRIPTION OF THE DRAWINGS

Figure 1 is a schematic side elevational view of a prior art hummingbird feeder.

Figure 2 is a schematic partial cross-sectional view of the hummingbird feeder shown in Figure 1, with a hummingbird feeding therefrom.

Figure 3 is a schematic side elevational view of a hummingbird feeder in accordance with one embodiment of the present invention.

Figure 4 is a partial cross-sectional schematic view of the hummingbird feeder shown in Figure 3, with one hummingbird feeding and one hummingbird standing on a removable perch.

Figure 5 is a bottom plan view of the hummingbird feeder of Figure 3, showing an optical magnifying effect thereof.

Figure 6 is a side elevational view of the hummingbird feeder shown in Figure 3.

Figure 7 is a partial perspective view of the hummingbird feeder shown in Figure 6.

Figure 8 is a top view of a portion of the hummingbird feeder shown in Figure 6.

Figure 9 is a side view of a hummingbird feeder in accordance with the present invention in a free standing configuration supported on support stands.

Figure 10A is an exploded view of the components of one of the support stands shown in Figure 9 including a vertically oriented rod with a coil and an end cap, as well as the open end of the reservoir that receives an inserting part of the end cap.

Figure 10B is a side view of the inserting part shown in Figure 10A when pushed into the cavity in the open end of the reservoir, with the rod and coil being insertable into a cavity formed by the inserting part in the direction indicated by the arrows.

Figure 11A is an exploded view of a hummingbird feeder in accordance with the present invention configured with mounting elements to secure the feeder to a window.

Figure 11B is an assembled view of the hummingbird feeder shown in Figure 11A, with the feeder as mounted parallel to the window.

Figure 12A is a perspective view of a hummingbird feeder in accordance with the present invention that includes the mounting elements shown in Figures 11A and 11B, with the feeder suspended therefrom by suspension elements.

Figure 12B is a perspective view of a hummingbird feeder like that shown in Figure 12A, with the suspension elements secured to natural support elements, such as branches.

Figure 13A is an exploded perspective view of the components of a hummingbird feeder in accordance with the present invention that includes suction cups to attach the feeder to a window, with the feeder mounted perpendicular to the window and supported by a suspension line.

Figure 13B is a perspective view of the hummingbird feeder components shown in Figure 13A as assembled and supported by the suction cups that are adhered to the window and the suspension line that is also adhered to the window and coupled to the free end of the feeder in accordance with the present invention.

Figure 14A is a perspective exploded view of a hummingbird feeder in accordance with the present invention in which two reservoirs have been joined by a connecting end cap to create an extended length feeder.

Figure 14B is a perspective assembled view of the hummingbird feeder shown in Figure 14A.

Figure 15A is a perspective exploded view of a hummingbird feeder in accordance with the present invention in which three reservoirs have been joined by a connecting flat "T" end cap to create a T-shaped feeder.

Figure 15B is a perspective assembled view of the hummingbird feeder shown in Figure 15A.

Figure 16A is a perspective exploded view of a hummingbird feeder in accordance with the present invention in which five reservoirs have been joined by two connecting flat "T" end caps to create an H-shaped feeder.

Figure 16B is a perspective assembled view of the hummingbird feeder shown in Figure 16A.

Figure 17A is a perspective exploded view of a hummingbird feeder in accordance with the present invention in which four reservoirs have been joined by four connecting elbow-shaped end caps to create a rectangular-shaped feeder.

Figure 17B is a perspective assembled view of the hummingbird feeder shown in Figure 17A.

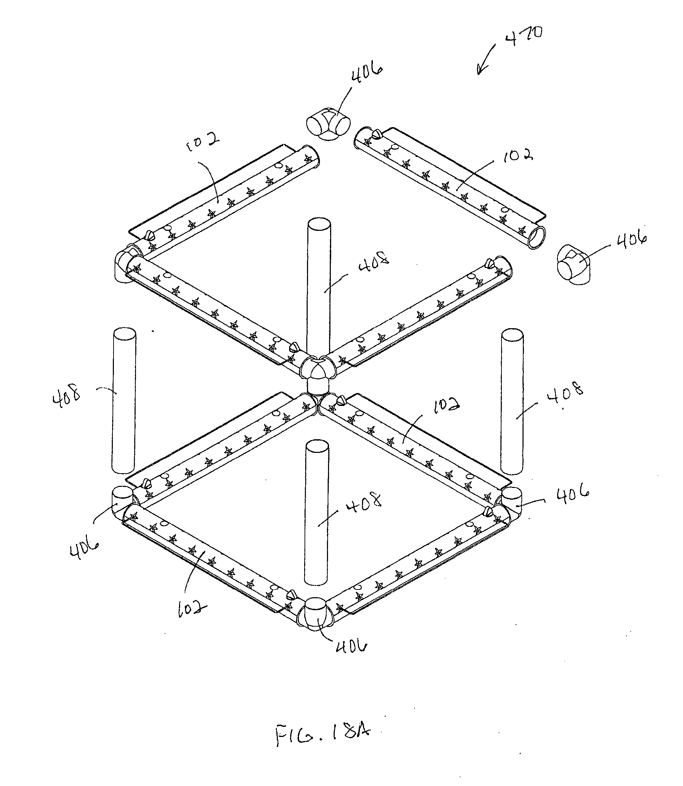

Figure 18A is a perspective exploded view of a hummingbird feeder in accordance with the present invention in which a first four reservoirs have been joined by four three-way connecting elbow-shaped "T" end caps to create a first rectangular-shaped feeder, a second four reservoirs have been joined by four three-way connecting elbow-shaped "T" end caps to create a second rectangular-shaped feeder, and the first and second rectangular-shaped feeders have been connected to one another in a stacked relationship by four vertically oriented spacing elements to create a dual-level, box-shaped feeder.

Figure 18B is a perspective assembled view of the hummingbird feeder shown in Figure 18A.

### DETAILED DESCRIPTION OF THE PREFERRED EMBODIMENT

The following detailed description is merely illustrative in nature and is not intended to limit the embodiments of the subject matter or the application in uses of such embodiments. As used herein, the word "exemplary" means "serving as an example, instance or illustration." Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Certain terminology may be used in the following description for the purpose of reference only, and thus are not intended to be limiting. For example, terms such as "upper", "lower", "above", and "below" refer to directions in the drawings to which reference is made. Terms such as "front", "back", "rear", and "side" describe the orientation and/or location of portions of the component within a consistent but arbitrary frame of reference which is made clear by reference to the text and the associated drawings describing the component under discussion. Such terminology may include the words specifically mentioned above, derivatives thereof: and words of similar import. Similarly, the terms "first", "second", and other such numerical terms referring to structures do not imply a sequence or order unless clearly indicated by the context.

The present invention disclosed herein is described in the context of hummingbird feeders. However, the horizontally oriented structure shown can be used in other contexts, as well, such as including, but without limitation, horizontally extending liquid-filled reservoirs or other devices.

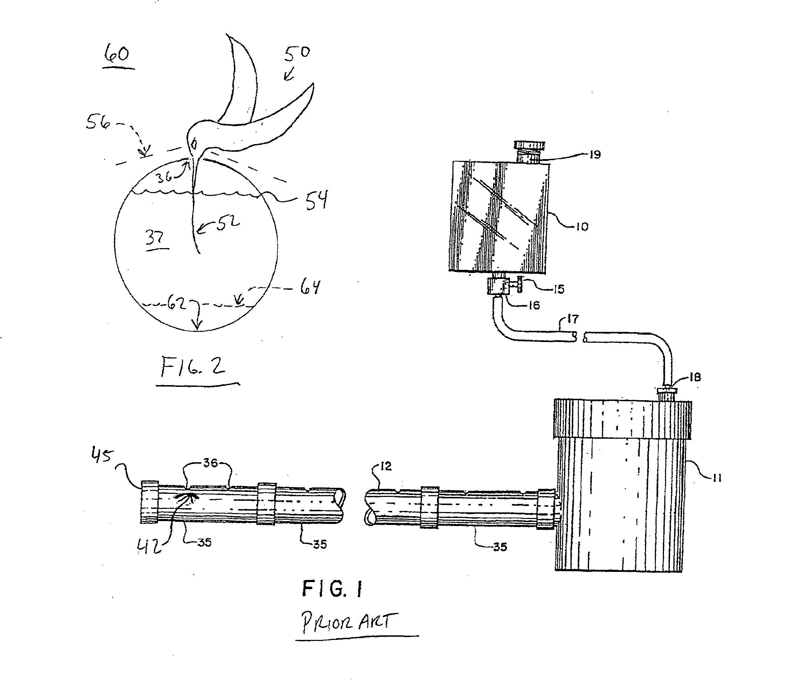

Figure 1 illustrates a prior art hummingbird feeder which includes a reservoir and a generally horizontally extending feeder tube portion. More specifically, as shown in Figures 1 and 2, the hummingbird feeder can include a food supply tank 10, a valve 15 that may be opened or closed to allow liquid from the supply tank 10 to flow through a first connector 18 into a reservoir 11. A coupling 16 is placed below the valve 15 so that the valve may be turned off and the supply tank 10 decoupled. This device is described in U.S. Patent No. 5,924,382, the entire contents of which is hereby expressly incorporated herein by reference. As disclosed in the 5,924,382 patent, the reservoir 11 includes a float valve for controlling the flow of nectar into the feeding station 12.

The feeding station 12 is formed of a longitudinally extending generally horizontally arranged pipe, rigidly fixed to the reservoir 11. The feeding station 12 includes a cavity 37 in its interior (Figure 2). The feeding station 12 is a hollow pipe designed to allow the flow of liquid into the feeding station. The length of the feeding station 12 is variable. For example, segments 35 can be added or removed. A cap 45 is placed at the end of the pipe 12 to contain the food inside the cavity.

The feeding holes 36 are spaced at about 4 inches apart. Additionally, perches 42 can be added adjacent the feeding holes 36. The holes 36 are disposed precisely along the apex of the upper surface of the feeding station 12.

An aspect of at least one of the embodiments of the present invention as disclosed herein includes the realization that when the feeder holes are aligned along the apex of a horizontally extending hummingbird feeding station, the hummingbird's view of its surroundings is limited. For example, as shown in Figure 2, a hummingbird 50 is hovering above the feeding hole 36 with its beak extending through the hole and its tongue 52 extending into the liquid nectar 54. In that position, the view that the hummingbird 50 can see from its eyes is schematically represented by the dashed area 56. While the feeder is shown as being generally cylindrical so as to have a substantially circular profile, the nectar reservoir could have other profile shapes including triangular, rectangular, hexagonal, octagonal, etc., as would be understood by persons of ordinary skill in the art. Therefore it is not intended that the invention be limited in shape to a cylindrical reservoir having a circular profile as shown herein.

At this angle, a hummingbird cannot easily see another bird approaching from above its head, for example, from the position identified by the reference numeral 60. Thus, a bullying bird (not shown) can more easily charge at the hummingbird 50 while it is attempting to feed, and thus through this aggressive behavior, prevent a large number of hummingbirds from simultaneously feeding from the feeding station 12.

Additionally, it has been discovered that in such a design, if the diameter of the feeding station pipe 12 is too large, and the hummingbird tongue 52 cannot reach the lowermost surface 62 of the hollow interior space 37, residual amounts of liquid nectar can pool within the space 37, for example, as schematically illustrated with the dashed liquid level line 64.

It has been discovered that a hummingbird can effectively reach up to about between 1-1/2 and 2 inches into this type of feeder; specifically, a distance from the base of its beak to the tip of its tongue. Thus, in a feeder, if the hole 36 is more than about 1.5 to about 2 inches from the lowermost surface 62, liquid nectar can pool in the feeder, and remain static sufficiently long to promote mold growth inside the feeder station 12.

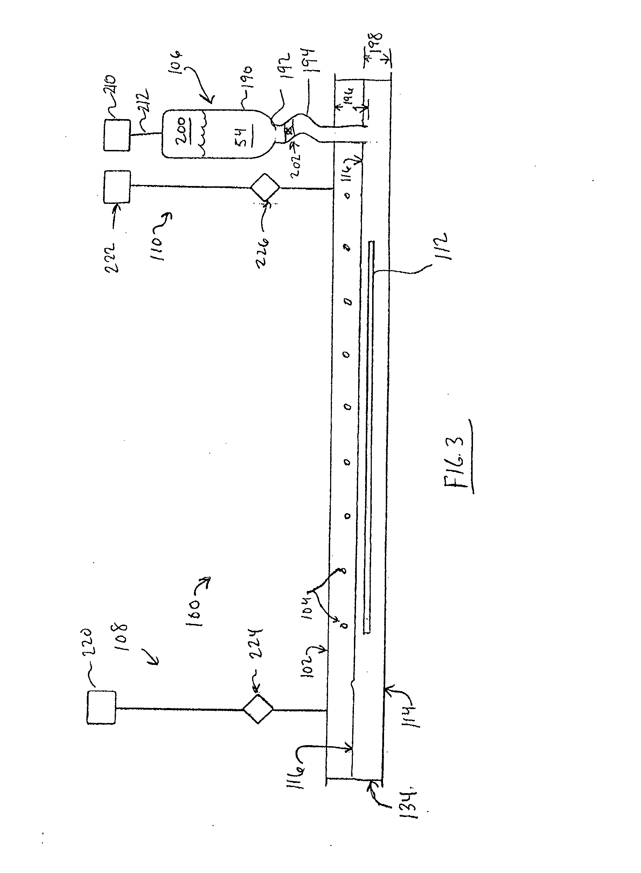

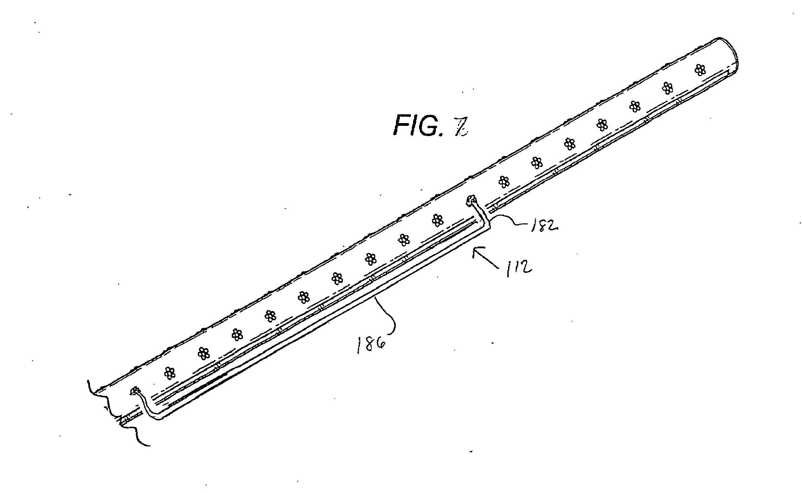

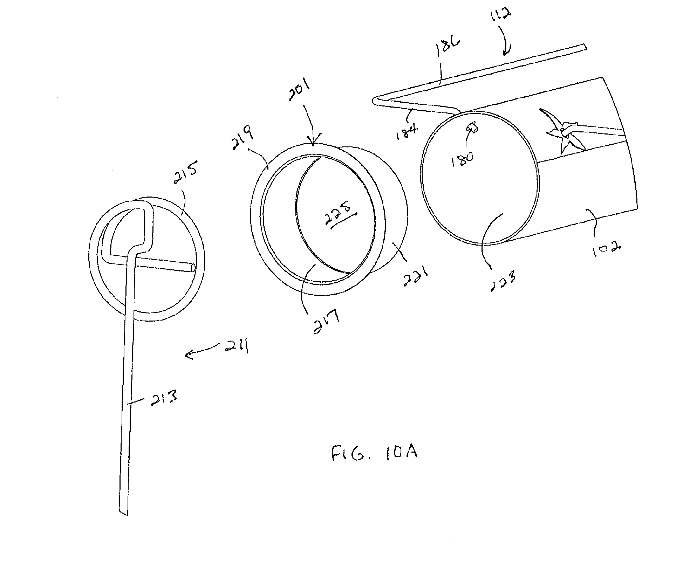

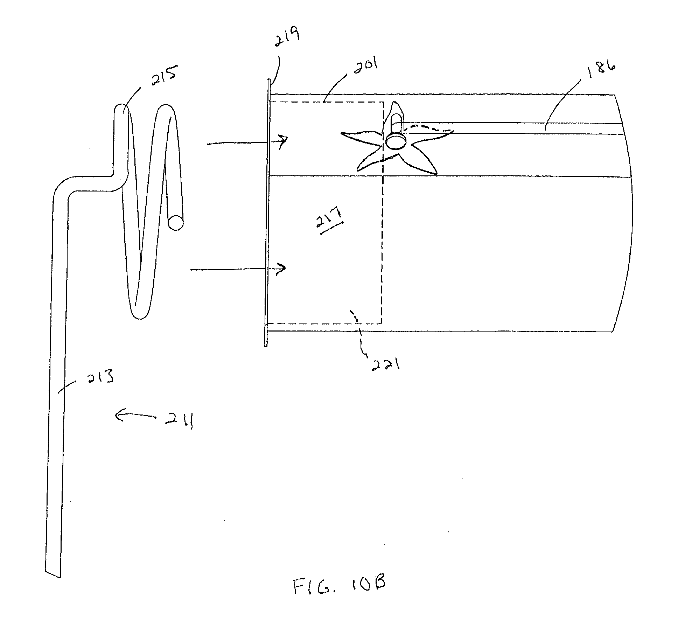

With reference to Figures 3-8, an embodiment of a hummingbird feeder according to the present invention is illustrated therein and identified by the reference numeral 100. The hummingbird feeder 100 includes a generally longitudinally extending reservoir 102 with a plurality of feeder holes 104. The reservoir is closed at each end by a closing element such as cap 201 (see Figures 10A and 10B). A push cap as shown is a simple and effective means of sealing the tube/reservoir. However, any sort of plug or other means of sealing the openings at the end of the reservoir may be used including, but not limited to, a threaded cover, an O-ring sealed plug, a bayonet mount gasketed insert, and the like. In addition, while in Figure 10A the rod is positioned to stand vertically, the rod could be placed horizontally and mounted to a vertical surface or wall in a special receptacle or into a simple hole.

Optionally, the feeder 100 can include an auxiliary storage container 106 configured to provide extra capacity for storing liquid, such as hummingbird feed nectar. Further, the feeder 100 can optionally include a plurality of adjustable suspension devices 108, 110. The feeder 100 can also include an optional perch 112 which, optionally, can be removable from the reservoir 102.

In some embodiments, the reservoir 102 can be generally cylindrical and include an optically transparent portion 114. The optically transparent portion can, optionally, be configured to form an optical magnification device when the reservoir 102 is filled, at least partially, with a liquid such as hummingbird feed nectar 116.

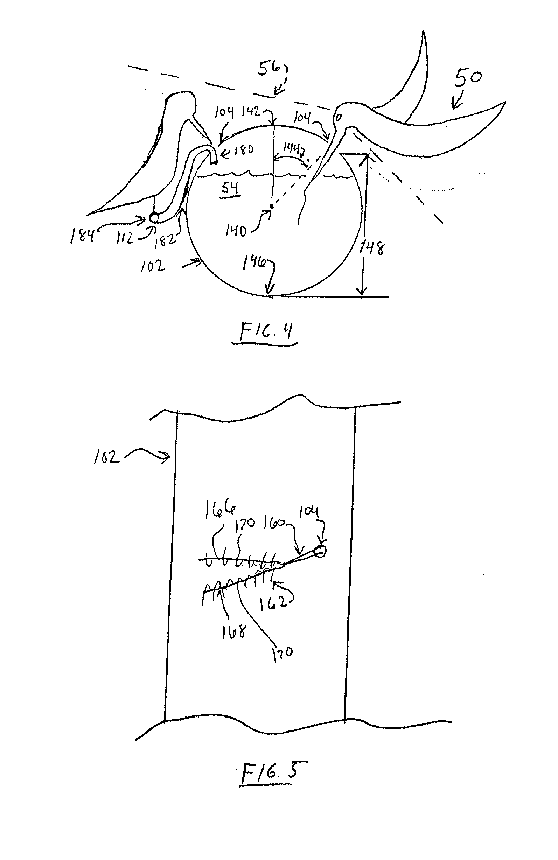

With continued reference to Figures 3 and 4, the longitudinally extending reservoir 102 can be formed with pipe or other cylindrical member. For example, the reservoir 102 can be formed with polycarbonate pipe having an outer diameter of about 0.5 inches to about 3.0 inches, preferably between about 1.5 inches and about 2.0 inches, and most preferably about 1.5 inches. However, other sizes and shapes for the reservoir can also be used provided the liquid is kept at a distance which allows the birds to comfortably reach the nectar and enables them to empty the entire contents of the reservoir. Additionally, in embodiments using polycarbonate, the polycarbonate can be optically transparent. However, other colors can also be used.

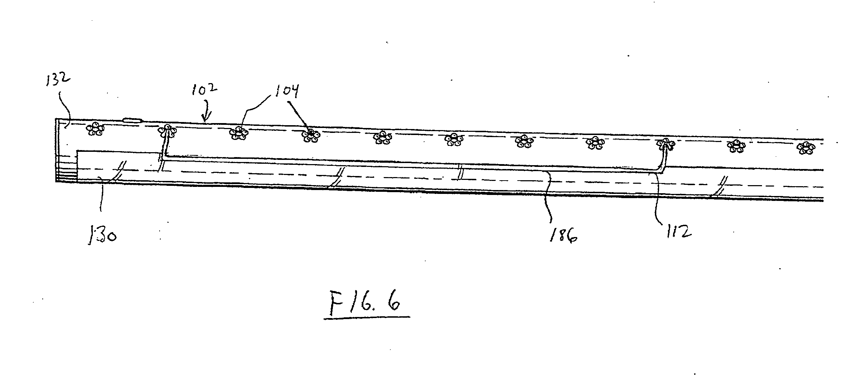

For example, as shown in Figure 6, the reservoir 102 can include an optically transparent portion 130 and a colored translucent or opaque portion 132. For example, in some embodiments, the portion 132 can be a translucent red-tinted portion. In some embodiments, the reservoir 102 can be formed from a single continuous piece of optically transparent polymer or plastic material such as polycarbonate, with a red coating or paint providing the translucent portion 132 with a red tint. Other configurations and materials can also be used provided the material from which the reservoir is made does not leach toxins into the nectar. Therefore, the container or reservoir could be made of metal or glass, or any combination of the foregoing materials. For example, the feeder could be made with a metal tube having plastic transparent or translucent windows. Alternatively, the top could be made of metal and the bottom made of translucent plastic or vice versa.

The reservoir 102 can also include one or more removable end caps 134 configured to provide a water-tight seal. For example, the end caps 134 can be generally round disc-shaped members with flanges configured to fit tightly with an inner surface of the reservoir 102. The end caps 134 and/or the reservoir 102 can be threaded or provided with other sealing means to provide a water-tight seal. Additionally, the caps 134 can be removable to allow for cleaning of the interior of the reservoir 102.

With reference to Figure 4, the reservoir 102 extends generally horizontally along a longitudinal axis 140. An apex 142 of the upper surface of the reservoir 102 is illustrated for reference purposes. The feeder holes 104 are offset from the apex, laterally towards both lateral sides of the reservoir 102. With reference to Figure 6, the feeder holes are preferably spaced about four inches from one another longitudinally along the length of the reservoir, although other feeder hole spacings could, of course, be used.

As illustrated in Figure 4, the feeder holes 104 can be offset by an angle 144 which can be approximately 10-90 degrees, more preferably between about 30 degrees and about 60 degrees, and most preferably about 45 degrees. The angle is determined as a ratio with the diameter of the tube. For example, a smaller tube diameter is shorter in height, allowing a wide variation of angles that would work with the length limitation of a hummingbird's beak and tongue. Conversely, a large diameter tube would need a small angle in order to make it possible for the hummingbird to reach the bottom of the reservoir with its tongue.

With the feeder holes offset from the apex as described, when a hummingbird 50 is feeding through the hole 104, its angle of view 56 is improved. In some embodiments, the hummingbird 50 can see over the apex 142 of the reservoir 102 and can maintain a better view and thus better monitor its surroundings. As such, the hummingbird 50 can better determine if other birds, such as other hummingbirds or bully birds, are approaching, and to perform more timely defensive maneuvers.

The distance from a portion of the beak of a hummingbird to its eye is about 1.5 to 2 inches, depending on the size of the hummingbird. Thus, in some embodiments, the difference in height between the feeder holes 104 and the apex 142 is no more than about 1.5 to about 2 inches and most preferably about 1.5 inches. Again, the desired height difference is dependent on the diameter of the reservoir tube and is a function of the angle of the feeder holes relative to the apex 142. The feeder hole 104 is positioned so as to be above the center line of the reservoir 102, which can be defined by the longitudinal axis 140. As such, a hummingbird 50 can simultaneously feed through the feeding hole 104 and see over the top of the apex 142.

As noted above, another aspect of the present invention disclosed herein includes the realization that in feeder configurations including a longitudinally extending reservoir, mold growth can be avoided, provided that the feeder hole 104 is no more than about 1.5 inches to about 2.0 inches from the lowermost surface of the reservoir. For example, as shown in Figure 4, the lowermost edge of the feeder hole 104 is spaced above the lowermost surface 146 of the reservoir 102 by a spacing 148. In some embodiments, the spacing 148 is approximately 1.5 to about 2.0 inches. Other spacings can also be used.

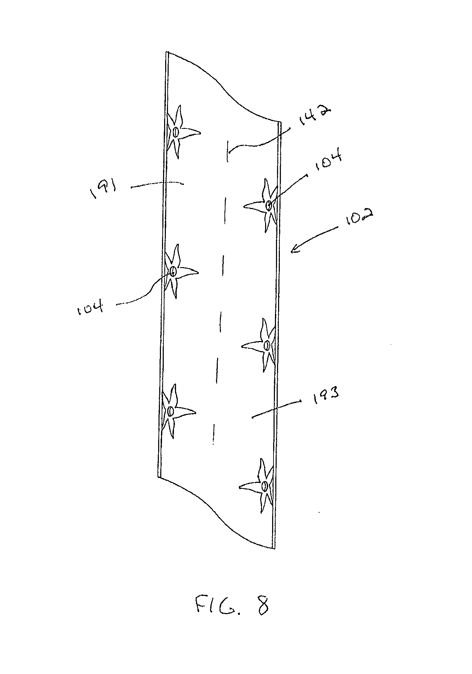

Figure 8 is a top view of the feeder showing the offset position of the feeder holes 104 on either side of the apex 142. Preferably, the feeder holes on a first lateral side 191 are also offset with respect to the feeder holes 104 on a second lateral side 193 so that two hummingbirds feeding simultaneously, one on the first side and the other on the second side, do not directly face one another. Alternatively, while the feeder holes on opposite sides 191, 193 of the apex 142 could be arranged in alignment with one another, this is not preferred because aligned holes could limit the birds' range of view. In addition, direct alignment on either side of the feeder may cause territorial issues, as well as a possible beak collision which could startle the birds.

With continued reference to Figures 3-5, as noted above, another aspect of the present invention as disclosed herein includes the realization that a cylindrical and horizontally extending hummingbird feeder can function as an optical magnifier, for example, when filled with hummingbird nectar feed. Figure 5 is a bottom plan view of the reservoir 102.

Optionally, as noted above, the reservoir 102 can be made from an optically transparent material, such as, for example, but without limitation, polycarbonate. When an optically transparent material is used to form a cylindrical reservoir 102 and the reservoir 102 is filled with liquid, such as hummingbird nectar 54 (Figure 4), the optically transparent material and the liquid 54 cooperate to form an optical magnifier.

Figure 5 illustrates a view of a hummingbird beak 160 and a bifurcated hummingbird tongue 162. Additionally, in Figure 5, the structure of the hummingbird beak and particularly the hummingbird tongue 162 is proportionally distorted to represent the optical magnification provided by the reservoir 102 and the liquid 54.

The structure of hummingbird tongues has only recently been more fully understood. More specifically, researches using high-speed video cameras, photographed hummingbirds and performed post-mortem microscopic examinations. This investigation determined that the edges of hummingbirds' tongues are lined with lamellae, a fringe of hairlike fleshy extensions. The tongue is wet when it encounters nectar, with the tongue's two tips tightly closed, with the lamellae flattened against it. Then the tip of the tongue separates and the lamellae extend from each fork, unfurling. As the bird pulls its tongue past the surface of the liquid, the tongue tips come together and the lamellae will curl inwardly, trapping nectar.

The hummingbird then pulls the tongue into its mouth, with the nectar trapped by its bifurcated tongue and lamellae. Thus, based on these observations, it was realized that hummingbird tongues do not operate as capillary devices. Rather, the lamellae actually trap liquid nectar, and the birds scoop nectar into their mouths using this trapping technique.

Figure 5 schematically illustrates forks 166, 168 of a bifurcated hummingbird tongue 162, as well as a plurality of curled lamellae 170 extending from each of the forks 166, 168. It has been discovered that constructing a hummingbird feeder so as to form an integrated optical magnifier can allow a human to observe movement of a hummingbird tongue 162 with the naked eye. This is a dramatic improvement in the enjoyment of hummingbird feeders.

With continued reference to Figures 3, 4, 6 and 7, the perch 112 can be configured to be removable from the reservoir 102. In some embodiments, the removable perch 112 can be in the form of a stiff steel rod or wire, plastic or the like, having engagement devices allowing the perch to be removably attached to the reservoir 102. With reference to Figures 4, 6 and 7, in some embodiments, the perch 112 can include hooked ends 180 sized to extend through the feeding holes 104. Additionally, the perch 112 can include a shoulder portion 182 designed to rest against an outer surface of the reservoir 102. Further, the perch 112 can include a protruding portion 184 which extends outwardly away from the outer surface of the reservoir 102 and then turns to form a bird support portion 186 that extends substantially parallel with the reservoir side wall to form a continuous perch spanning across a plurality of feed holes 104. The extension of the protruding portion and its location is highly dependent on the feeder hole location and the diameter of the tube. Various perch configuration may be used provided the perch allows a perched bird to comfortably feed. On a 1.5 inch diameter tube, the projection is preferably between 0.5 inches to 0.75 inches, and most preferably about 0.5 inches at or below the horizontal tangent point corresponding to the right angle 144 in Figure 4. The longitudinal length of the perch can vary but preferably provides a perch underneath every feeder hole when desired.

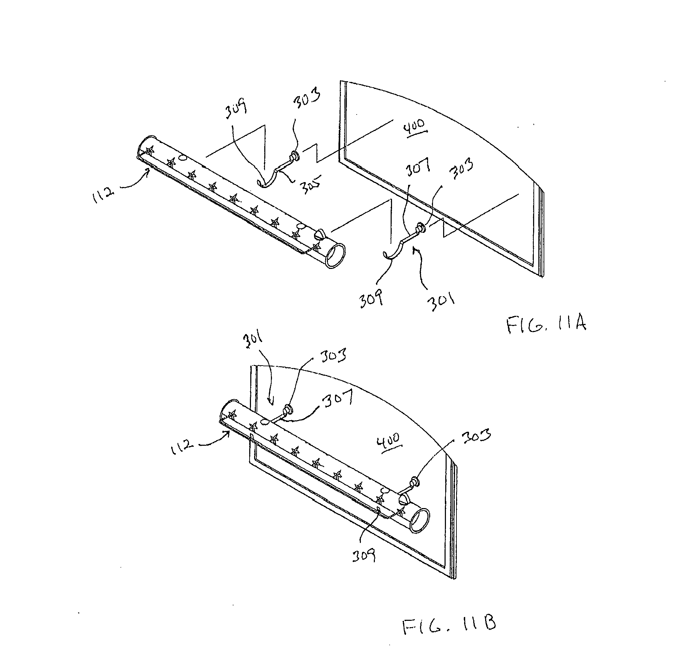

As such, the perch 112 can be simply inserted into two spaced apart feeding holes 104 as shown in Figures 11A and 11B for mounting it to the reservoir 102 or removed by simply removing the hooked ends 180 from the holes 104. Other configurations for mounting the perch can also be used.

With continued reference to Figure 3, the auxiliary storage container 106 can be configured to provide a gravity feed of additional liquid nectar 54 into the reservoir 102 with a valveless arrangement. For example, the auxiliary storage container 106 can include a reservoir tank 190. The tank 190 can be in the form of any type of container including, for example, but without limitation, plastic or glass jars. The tank 190 can include an opening 192 at its lower end.

The lower opening 192 can be connected to the reservoir 102 with a rigid or flexible connecting member in the form of a connector hose 194 or the like. The lower end of the connector hose 194 can extend into the interior of the reservoir 102, a predetermined distance 196. For example, the depth into which the lower end of the hose 194 extends into the reservoir 102 can be sized so as to control the maximum height 198 of the liquid nectar 54 in the reservoir 102.

For example, in the illustrated configuration, the air space 200 above the liquid nectar 54 in the tank 190 drops in pressure as the liquid nectar 54 flows downwardly into the reservoir 102. As such, liquid nectar 54 can only flow downwardly from the tank 190 into the reservoir 102 when the height 116 of the nectar 54 falls below the lower end of the hose 194. When that happens, air from the interior of the reservoir 102 can flow upwardly into the hose 194 and into the empty space 200 above the liquid nectar 54, and thus allows more of the liquid nectar to flow downwardly into the reservoir 102. This design does not require any valves in order to provide continuous refilling of the reservoir 102.

Optionally, the auxiliary storage container 106 can include a valve 202. As such, the valve 202 can be used to close the outlet of the tank 190 to thereby allow the tank 190 to be removed and refilled with liquid nectar and replaced without spilling. In the illustrated embodiment, the tank 190 is suspended from a fixed point 210 with a cable 212. Any suspension device can be used to suspend the tank, as desired.

With continued reference to Figure 3, as noted above, the feeder 100 can include two adjustable suspension devices 108, 110. The adjustable suspension devices 108, 110 include upper ends connected to fixed points 220, 222. Preferably, the fixed points 220, 222 are stiffly fixed in place because the reservoir 102 can become quite heavy when it is filled with liquid nectar 54. Thus, thin tree branches are not ideal for serving as the fixed points 220 or 222. Instead, thicker tree branches or other fixed-frame structures may serve as better fixed points 220, 222.

The adjustable suspension devices 108, 110 can be constructed with any known materials, such as, for example, but without limitation, ropes, chains, cables, strings, straps, etc. Depending on the type of material used to form the suspension devices 108, 110, adjustment devices can be configured to allow the suspension material to have an effectively variable length. For example, where rope is used for forming the adjustable suspension devices 108, 110, the adjustment devices 224, 226 can be in the form of clips, straps, Velcro, pins, clamps, or knots, such as a hitch, for example, a Blake's hitch. However, other mechanisms can also be used.

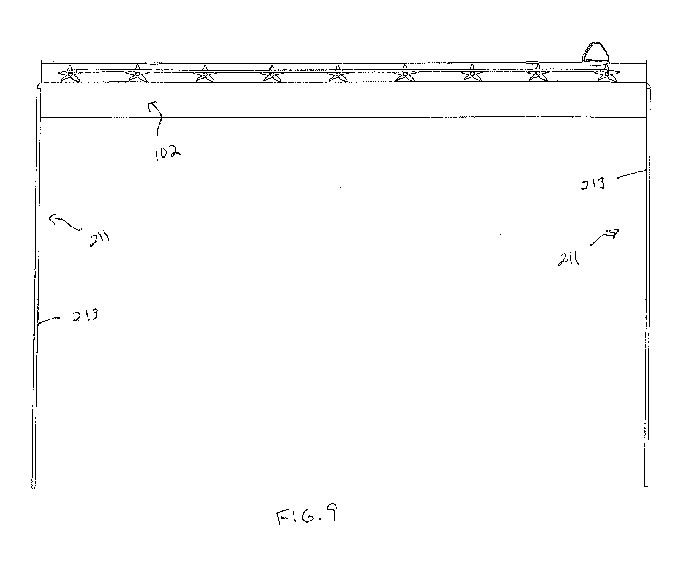

As shown in Figure 9, the hummingbird feeder according to the present invention may also be used in a free standing configuration in which the reservoir 102 is supported on support stands, generally designated by reference numeral 211. Each support stand 211 has a vertically oriented rod 213 with a coil 215 at one end of the rod 213 as shown in Figures 10A and 10B. The coil 215 is sized to be fit with a friction fit into the cavity 217 formed within the cap 201. Other configurations for securing the stand to the ends of the reservoir could also be used as would be understood by persons of ordinary skill in the art. In the embodiment shown, the cap has a rim 219 and an inserting part 221 with a closing wall 225. The inserting part 221 is pressed into the open end 223 of the reservoir 102, and the coil is pressed into the cavity 217 of the cap 210. The closing wall 225 completes the seal on the end of the reservoir. With a support stand 211 secured to each end of the reservoir 102 by a coil 215, the hummingbird feeder can be supported above the ground by the rods 213. Also, while in Figures 9, 10A and 10B the rods stand vertically, alternatively the rods could be placed horizontally and mounted to a vertical surface or wall in a special receptacle or into a simple hole.

In alternative embodiments, the hummingbird feeder 100 can be attached to a window, for example, by suction cups mounted along one of the lateral sides 191, 193 of the reservoir 102 that attach directly to the surface of the window (not shown). In some such embodiments, the reservoir 102 could have feeder holes 104 only on the first lateral side 191 thereof, with the second lateral side 193 of the reservoir 102 being too closely spaced to the window to accommodate birds feeding from feeding holes placed on the second lateral side of the reservoir 102.

Alternatively, the hummingbird feeder in accordance with the present invention may be configured with mounting elements generally designated by reference numeral 301 to secure the feeder to a window 400 as shown in Figures 11A, 11B, 12A and 13B. The mounting elements include suction cups 303 and a hanger 305. The hanger has a generally horizontal portion 307 adjacent the suction cups and extending outwardly therefrom, and a bowl-shaped curved portion 309 at the distal end of the hanger. In the embodiment shown in Figures 11A and 11B, the reservoir is supported within the bowl-shaped curved portion 309 as shown in the assembled view of Figure 11B.

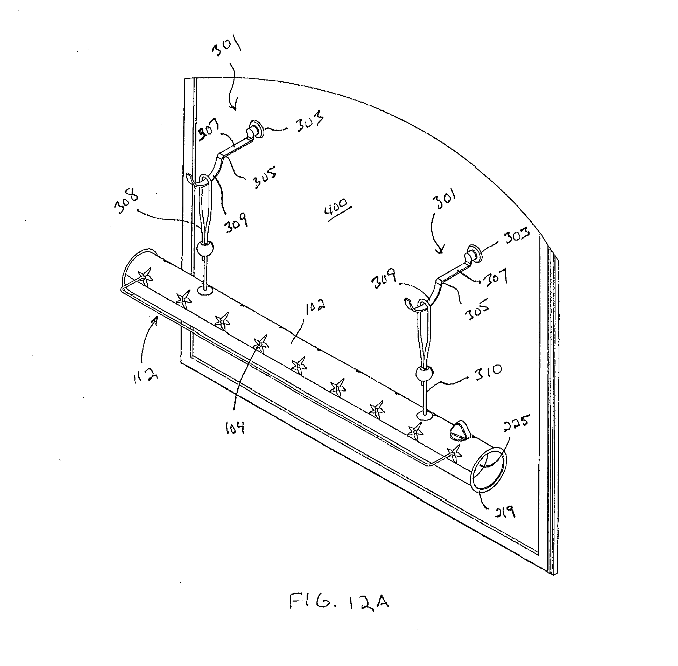

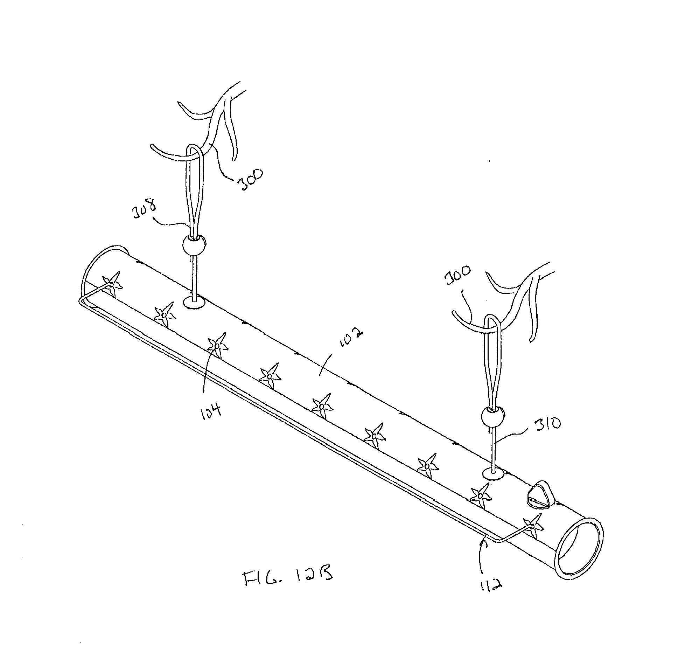

In one of the alternate embodiments shown in Figures 12A and 12B, the feeder is held by suspension devices 308, 310, either secured to the mounting elements 301 or to natural support elements such as branches 300. With the feeders shown in each of Figures 11A-11B, the mounting elements hold the reservoir 102 at a position spaced from the window 400. In such a configuration, the reservoir 102 could be mounted a sufficient distance away from the window so as to accommodate additional birds feeding on the second lateral side 193 of the reservoir 102 closest to the window. The same is true for the embodiment shown in Figures 12A and 12B in that, whether supported on mounting elements 301 or natural branches 300, the feeder may be spaced from surrounding obstacles or a window so that the reservoir 102 can include feed holes 104 on both lateral sides, in the positions and arrangements described above. Additionally, the spacing between the window or other obstacle and the reservoir 102 can be sufficient to accommodate a removable perch 112 on the side of the feeder nearest the window or obstacle.

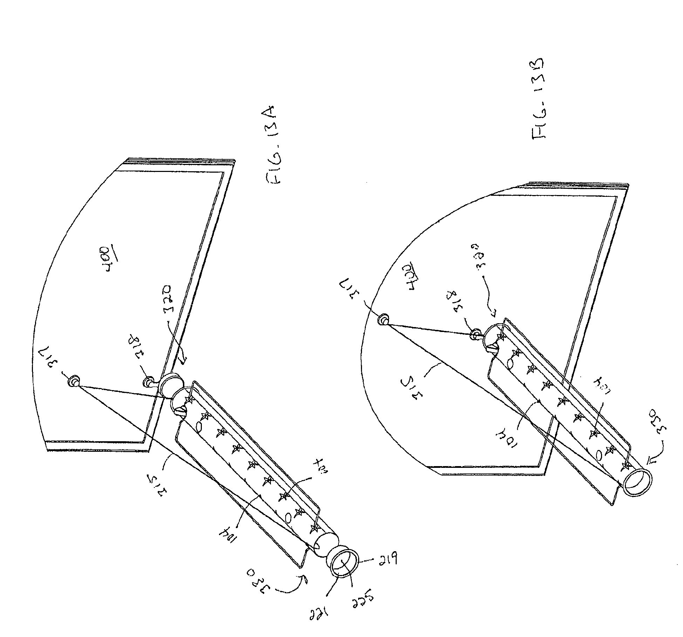

As shown in Figures 13A and 13B, the feeder may also be attached directly and perpendicularly to the window 400 using upper and lower suction cups 317, 318, and a suspension line 315. The lower suction cups 318 are part of or connected to the end cap on the connecting side, generally designated by reference numeral 320, of the feeder. The upper suction cups 317 are positioned above the lower suction cups and in generally vertical alignment therewith on the window 400. The suspension line 315 extends from the connecting side 320 of the feeder to the upper suction cup 317 and then to a distal or free end, generally designated by reference numeral 330, of the feeder. The suspension line 315, which may be a flexible line or rigid structure like metal wire or tubular member, provides a cantilever support to the free end 330.

In the embodiment shown in Figures 13A and 13B, removable perches may be easily secured to both sides of the feeder as shown. Feeder holes 104 are also provided on both side of the feeder. Other alternative methods of mounting the perches may also be used as would be known by those skilled in the art.

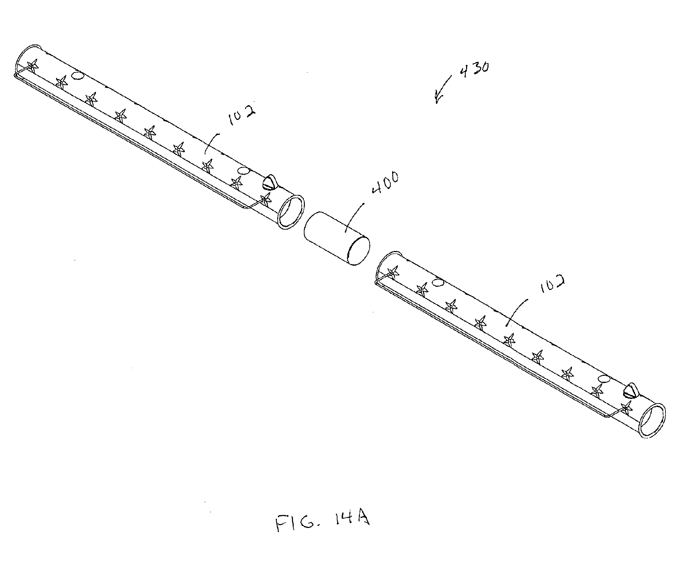

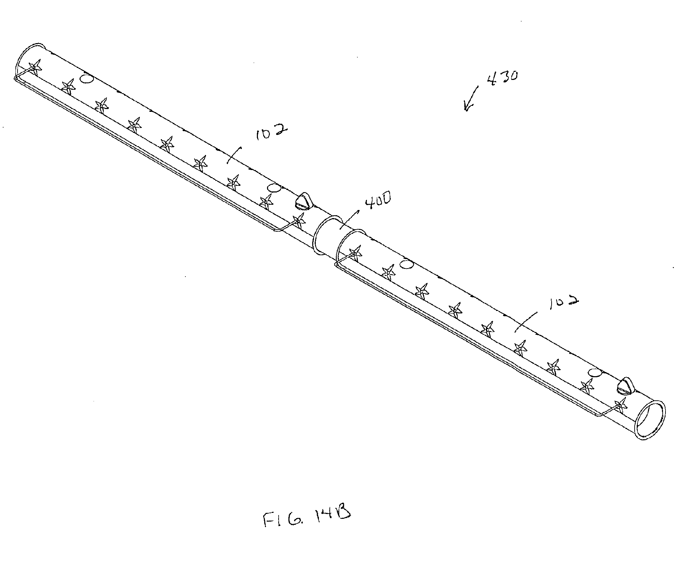

While the hummingbird feeder is disclosed herein as an elongated member having the ends sealed with plugging caps or the like, the ends of the reservoir may, alternatively or additionally, be provided with one or more connecting members such as straight connecting end caps 400 as shown in Figures 14A and 14B. As shown, the use of a straight connecting end cap 400 enables two reservoirs to be joined together to create an extended length feeder generally designated by reference numeral 430.

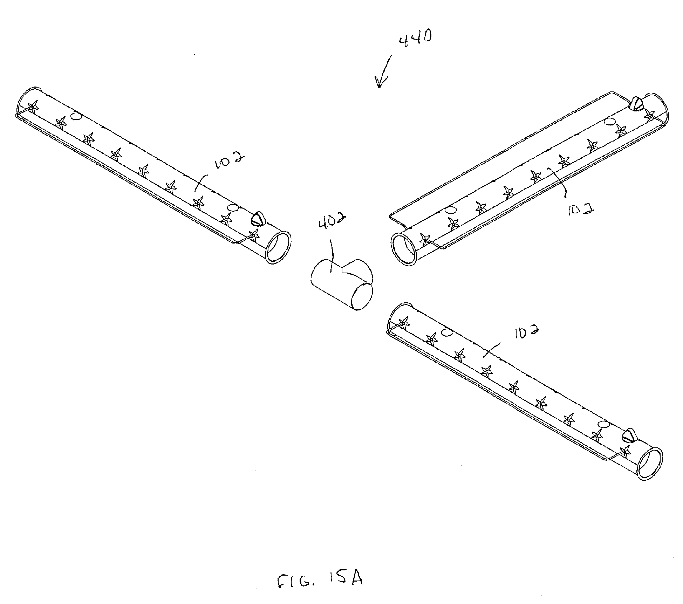

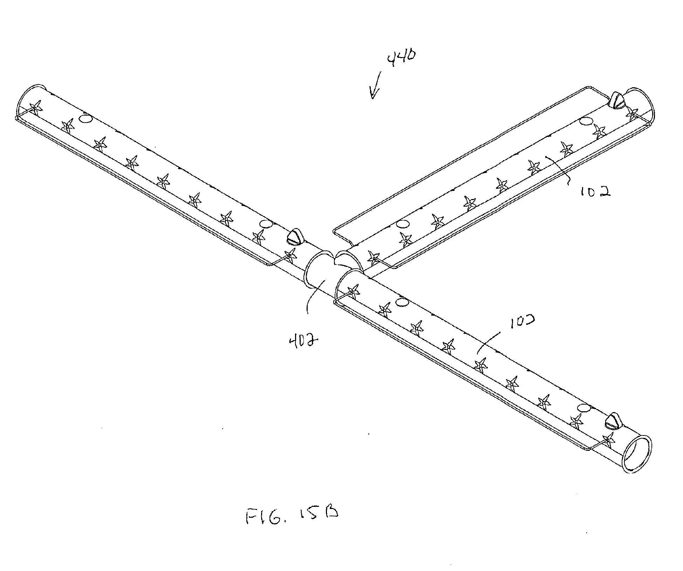

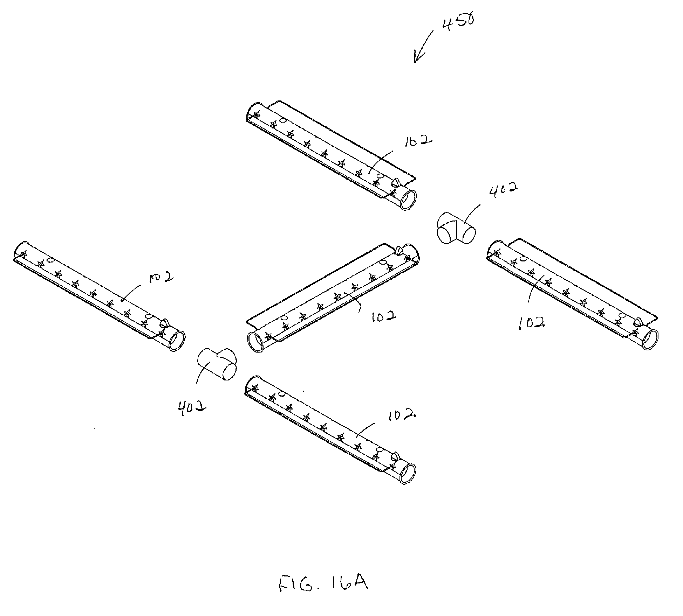

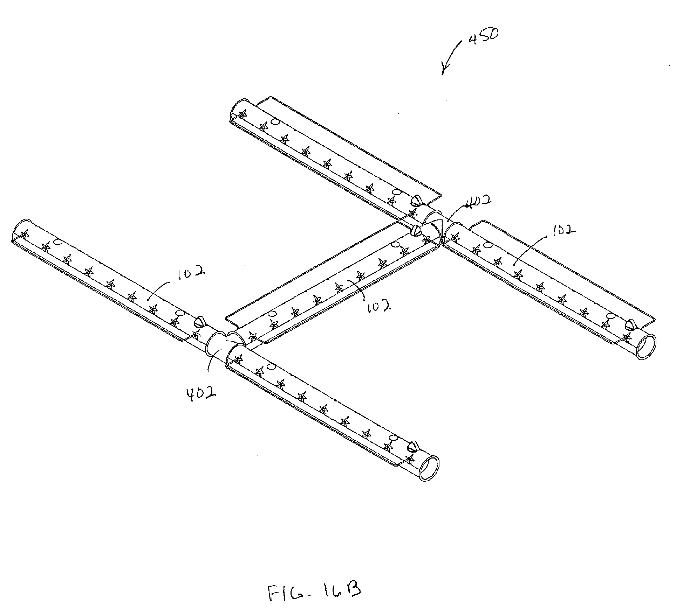

In addition, or alternatively, to straight connecting end caps 400, multiple reservoirs, such as the three reservoirs 201 shown in Figures 15A and 15B, may be joined by a connecting member such as a flat "T" end cap 402 to create a T-shaped feeder generally designated by reference numeral 440. Five reservoirs may be joined in like manner by using two connecting flat "T" end caps 402 as shown in Figures 16A and 16B to create an H-shaped feeder generally designated by reference numeral 450.

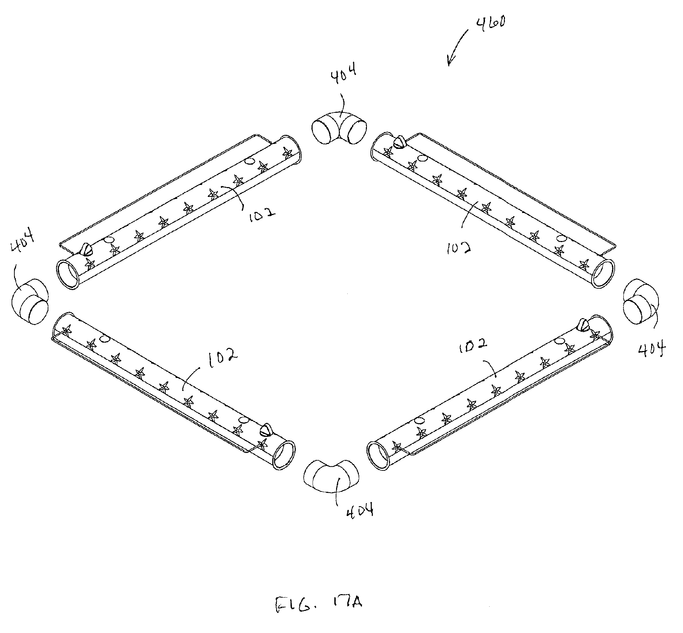

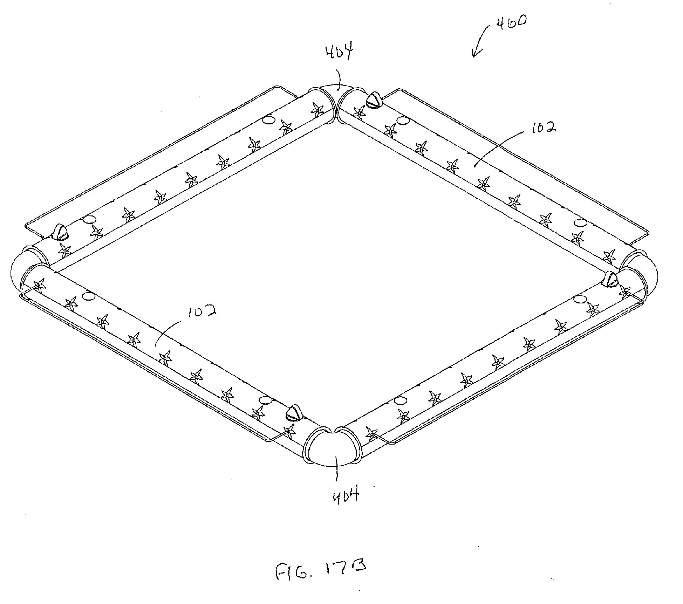

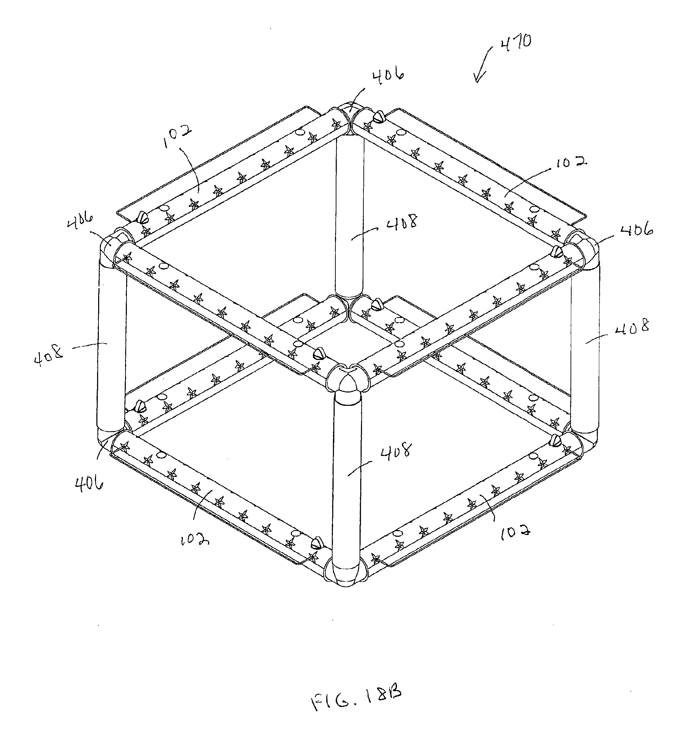

A further alternative structure is shown in Figures 17A and 17B in which four reservoirs 102 may be connected using a plurality of connecting members such as four elbow-shaped connecting end caps 404 to create a rectangular-shaped feeder generally designated by reference numeral 460. While in this example, the feeder is substantially square-shaped, other rectangular shapes could, of course, be created. As further shown in Figures 18A and 18B, the rectangular-shaped feeder configuration may be constructed using three-way connecting elbow-shaped "T" end caps 406. With the three-way connecting elbow-shaped "T" end caps 406, two of the rectangular-shaped feeders may be connected to one another in a stacked relationship by four vertically oriented spacing members 408 to create a dual-level, box-shaped feeder generally designated by reference numeral 470.

By using several end-cap configurations (straight, elbow-shaped, flat "T", elbow-shaped "T") as shown in Figures 14A-18B, a multitude of configurations may be devised creating feeding stations with a high number of available feeding ports. This modular concept also gives the user some creative license to produce a unique shape which captivates the user through creative interaction with the product, potentially increasing customer satisfaction. While various possible configurations are shown, other arrangements of multiple reservoirs could also be constructed as would be understood by persons of ordinary skill in the art.

As described herein, the present invention is directed to a hummingbird feeder having a larger ratio of length to width than with conventional feeders such that the length component of the feeder disclosed herein is far greater than the other dimensions of the feeding reservoir, including the sectional profile thereof. This substantial length component gives the feeder a "bar-like" or "rod-like" configuration, producing in effect a "hummer bar" feeder, which allows large numbers of birds to access the nectar at once in a manner that is not possible with prior art hummingbird feeders.

The invention being thus described, it will be apparent that the same may be varied in many ways. Such variations are not to be regarded as a departure from the spirit and scope of the invention, and all such modifications as would be recognized by one skilled in the art are intended to be included within the scope of the following claims.

## Claims

1. A hummingbird feeder including a feeding reservoir and feed ports to allow hummingbirds to access nectar in the feeding reservoir,
**characterized in that**,
said feeding reservoir is an elongated member having a horizontal orientation when in use, the feeding reservoir being closed on each end and including a top portion and a bottom portion, the top portion having an upper outer surface and two downwardly directed sides, the bottom portion having a lowermost inner surface and two upwardly directed sides, said bottom portion being without apertures and configured to hold nectar therein on said lowermost inner surface, the top portion and the bottom portion together forming the feeding reservoir; and
a plurality of feeder holes are formed in said upper portion downwardly directed sides, said feeder holes being laterally spaced away from and below an uppermost part of the upper outer surface of the feeder reservoir.

2. The hummingbird feeder as set forth in claim 1, wherein said feeder holes are positioned between about 1.5 inches and about 2 inches above the lowermost inner surface of the bottom portion.

3. The hummingbird feeder as set forth in claim 1, wherein a distance between said feeder holes and said lowermost inner surface is no longer than a hummingbird=s total reach with its tongue when feeding, said feeder holes being longitudinally spaced from one another to be about 4 inches apart.

4. The hummingbird feeder as set forth in claim 1, wherein the reservoir is generally cylindrical and said feeder holes are offset from an apex of the cylindrical reservoir by an angle of between about 30 degrees and about 60 degrees.

5. The hummingbird feeder as set forth in claim 4, further comprising a perch removably attached to the feeding reservoir, said perch including an elongated rod with a hooked portion on each end thereof, said perch being removably attached to the feeding reservoir by the hooked portions.

6. The hummingbird feeder as set forth in claim 1, wherein each end of the elongated reservoir is closed by an end cap, said end cap including a connecting structure by which the elongated reservoir is connected to a second elongated reservoir to lengthen the feeder and/or change an overall shape of the feeder.

7. The hummingbird feeder as set forth in claim 5, wherein said rod includes:
a bird supporting portion that extends substantially parallel with a longitudinal axis of the feeder and is spaced from an outer surface of the feeding reservoir, said rod including a shoulder portion designed to rest against the outer surface of the feeding reservoir when the hooked ends are inserted in the feeder holes, the shoulder portion being generally perpendicular to the bird supporting portion; and
a protruding portion connecting the shoulder portion and the bird supporting portion, said protruding portion extending outwardly away from the outer surface of the feeding reservoir to space the bird supporting portion away from said feeding reservoir outer surface.

8. The hummingbird feeder as set forth in claim 7, wherein a preferred spacing of the bird supporting portion from the feeding reservoir side wall is about 0.5 inches off a tangent surface located at a right angle from the apex.

9. The hummingbird feeder as set forth in claim 1, further comprising an auxiliary storage container configured to provide a valveless gravity feed of additional liquid nectar into the feeding reservoir.

10. The hummingbird feeder as set forth in claim 9, wherein the auxiliary storage container includes a tank with an opening at a lower end thereof, said lower end opening being in fluid communication with an interior of the feeding reservoir via a hose that extends into said reservoir interior, a length of said hose determining a maximum height of nectar held within the feeding reservoir, nectar flowing into the feeding reservoir when a nectar level falls below a bottom end of the hose and nectar flow stopping when the hose bottom end becomes immersed in said nectar.

11. The hummingbird feeder as set forth in claim 1, further comprising a mounting member for supporting the elongated feeding reservoir in the horizontal orientation during use, said mounting member being selected from the group consisting of suction cups, adjustable suspending devices for hanging the feeder, and support members that extend upwardly from the ground to hold the feeder above the ground at a desired height.

12. The hummingbird feeder as set forth in claim 1, further comprising a plurality of elongated reservoirs, each of said plurality of reservoirs being closed on at least one end by a connecting member configured to be removably connected to said at least one end, said one of said plurality of reservoirs being connected to at least one other of said plurality of reservoirs by said connecting member to lengthen the feeder and/or change an overall shape of the feeder.

13. The hummingbird feeder as set forth in claim 12, wherein said plurality of elongated reservoirs includes at least four reservoirs, each reservoir having two ends with a connecting member at each of said two ends, said four reservoirs being connected end to end by said connecting members at approximately 90 degree angles to form a generally rectangular feeder.

14. The hummingbird feeder as set forth in claim 13, further comprising four additional elongated reservoirs coupled to one another at approximately 90 degree angles by four additional connecting members to create a second generally rectangular feeder, said first generally rectangular feeder being arranged in a stacked relationship with said second generally rectangular feeder, spaced therefrom and coupled thereto by a plurality of generally vertically oriented spacing members to create a substantially box-shaped feeder.

15. The hummingbird feeder as set forth in claim 1, wherein said top portion is separate from said bottom portion and joined thereto along abutting edges to form the feeding reservoir, said bottom portion being transparent and said top portion being opaque, said transparent bottom portion in combination with nectar contained in the bottom portion creating an optical magnifier that enables bird watchers to view a hummingbird=s tongue inside the feeding reservoir as the bird feeds from one of the feeding holes.
